# EUROPÄISCHE PATENTSCHRIFT

(11) **EP 2 739 019 B1**
(45) Veröffentlichungstag und Bekanntmachung des Hinweises auf die Patenterteilung: **07.01.2015**
(21) Anmeldenummer: 12075136.7
(22) Anmeldetag: 30.11.2012
(51) Int. Cl.: H04M 1/60, H04M 1/725

(54) **Einspielung akustischer Signale in eine Sprachverbindung**
Feeding acoustic signals into a voice connection
Stabilisation de signaux acoustiques dans une liaison vocale

(43) Veröffentlichungstag der Anmeldung: 04.06.2014
(73) Patentinhaber: Deutsche Telekom AG, 53113 Bonn (DE)
(72) Erfinder: Sommerwerk, Andreas, 10119 Berlin (DE); Knörig, André, 10115 Berlin (DE); Hermann, Stefan, 12681 Berlin (DE); Kadel, Hans, 12059 Berlin (DE)
(74) Vertreter: Brandt & Nern Patentanwälte

(56) Entgegenhaltungen:
- EP-A1- 1 104 968
- WO-A2-2007/024566
- US-A1- 2003 083 024
- US-A1- 2008 165 988

## Beschreibung

Die Erfindung betrifft eine Lösung, welche es ermöglicht, zusätzliche akustische Signale in eine über ein Kommunikationsnetz bestehende Sprachverbindung einzuspielen. Sie bezieht sich hierbei auf eine entsprechende Möglichkeit für Sprachverbindungen unterschiedlichster Art. Hiervon erfasst sind insbesondere mittels Mobil- oder Festnetzendgeräten aufgebaute Telefonverbindungen, darüber hinaus aber auch Voice-over-IP-Verbindungen, wie insbesondere Voiceover-LTE, oder Sprachverbindungen, welche unter Nutzung von Internetkommunikationsdiensten, wie Skype und vergleichbaren, aufgebaut werden. Gegenstand der Erfindung sind dabei ein Verfahren und ein System, welche es ermöglichen, in Sprachverbindungen der vorgenannten Art zusätzliche akustische Signale einzuspielen.

Insbesondere unter Jugendlichen ist es verbreitet, in die Kommunikation mit einem anderen Kommunikationspartner Hinweise über das eigene Befinden beziehungsweise den augenblicklichen Gemütszustand einfließen zu lassen, eigene Äußerungen während der Kommunikation emotional zu bewerten oder dem jeweiligen Kommunikationspartner eine Art emotionales Feedback zu den von ihm gemachten Äußerungen zu geben. Man denke hierbei an die weite Verbreitung der Verwendung so genannter Emoticons in E-Mails, SMS sowie ähnlichen Textnachrichten oder bei Chats. Bei einer Gesprächsverbindung, wie beispielsweise einer Telefonverbindung, bietet es sich an, derartige emotionale Äußerungen oder Ähnliches in Form akustischer Signale zum Ausdruck zu bringen. Verwendung finden hierbei typische akustische Signale, wie beispielsweise das Läuten einer Glocke, aber auch so genannte Jingles, Sprach- oder Musiksequenzen aus bekannten Filmen oder Sequenzen bekannter Musikstücke. Unabhängig von der Signalisierung emotionaler Befindlichkeiten eines Kommunikationspartners besteht aber, insbesondere wiederum bei jungen Leuten, im Einzelfalle auch das Bedürfnis, die Sprachkommunikation über Telefon oder Voice-over-IP mit Musik oder Ähnlichem zu unterlegen. Um diesem Bedürfnis Rechnung zu tragen, wurden technische Möglichkeiten geschaffen, akustische Signale bei Bedarf in bestehende Sprachverbindungen einzuspielen.

So wird beispielsweise in der US 8036644 B2 eine Lösung beschrieben, einer mobilen Kommunikation Hintergrundgeräusche hinzuzufügen. Gemäß der dazu beschriebenen Lösung wählt ein Anrufer, welcher von der Möglichkeit des Einspielens akustischer Signale Gebrauch machen möchte, eine spezielle Rufnummer eines einen entsprechenden Service anbietenden Unternehmens an und fügt hierbei zusätzlich an diese Rufnummer die Rufnummer des anzurufenden Kommunikationspartners an. Durch Einrichtungen des entsprechenden Dienstes zur Bereitstellung der Hintergrundgeräusche wird neben der zur eigentlichen sprachlichen Kommunikation dienenden Verbindung zu dem gewünschten Kommunikationspartner über einen zusätzlichen Kanal eine weitere Verbindung aufgebaut, so dass eine Telefonkonferenzschaltung etabliert wird, bei der über den zusätzlichen Kanal die entsprechenden (gewünschten) Hintergrundgeräusche eingespielt werden können. Eine vergleichbare Lösung wird darüber hinaus durch die US 6,683,938 B1 beschrieben. Auch hier erfolgt das Einspielen zusätzlicher akustischer Signale mittels dafür ausgebildeter Technik des Netzbetreibers oder eines Dienstleistungsanbieters. Die Lösung gemäß der letztgenannten Druckschrift geht dabei ebenfalls von der Etablierung einer Art Telefonkonferenz aus. Beiden zuvor genannten Lösungen ist gemeinsam, dass sie durch einen Dienstleister, nämlich mittels der Technik eines Netzdienstleisters oder von Einrichtungen eines speziellen Dienstleisters zur Verfügung gestellt werden. Neben der Tatsache, dass hierfür für den Nutzer, also zumindest einen der Kommunikationspartner, möglicherweise zusätzliche Kosten entstehen, besteht ein Nachteil derartiger Lösungen darin, dass sie nicht ad hoc nutzbar sind. Vielmehr muss der beziehungsweise müssen sich die Kommunikationspartner vorher dazu entscheiden, wenn sie von der Möglichkeit eines zusätzlichen Einspielens akustischer Signale Gebrauch machen wollen.

Eine andere, nämlich nutzerseitige Lösung wird durch die US 2001/0039873 A1 beschrieben. Die in der genannten Druckschrift offenbarte Lösung bezieht sich auf eine spezielle hardwarebasierte Lösung, gemäß welcher zukünftig hergestellte und vertriebene Mobilfunkgeräte bereits herstellerseitig mit einer entsprechenden Funktionalität ausgestattet werden. Von dieser Lösung können aber die Inhaber älterer beziehungsweise gegenwärtig am Markt befindlicher Endgeräte nicht partizipieren.

Auch die US 2008/0165988A1 beschreibt eine Lösung, bei welcher ein Endgerät, beispielsweise ein Mobiltelefon, bereits herstellerseitig mit einer entsprechenden Funktionalität ausgestattet wird. Diese gestattet es, von einem externen Mikrofon oder einem Mikrofon des Endgeräts entgegengenommenen akustischen Signalen zusätzliche akustische Signale beziehungsweise, genauer gesagt, Audiosignalen, welche von einem Speicher des Endgeräts bereitgestellt werden, akustische Signale des externen Mikrofons hinzuzumischen. Auf diese Weise werden zum Beispiel einem Benutzer des Endgeräts, der als Fußgänger unterwegs von einem Speicher des Gerätes bereitgestellte Musik hört, über an das Gerät angeschlossene Kopfhörer zusätzlich zu der Musik Umgebungsgeräusche zu Gehör gebracht, um die Sicherheit des Benutzers im Straßenverkehr zu erhöhen.

Aufgabe der Erfindung ist es daher, eine Lösung bereitzustellen, welche es Kommunikationspartnern, also den Teilnehmern einer bestehenden Sprachverbindung ermöglicht, ad hoc nutzerseitig das Einspielen zusätzlicher akustischer Signale zu veranlassen. Hierfür sind ein Verfahren und ein zur Durchführung des betreffenden Verfahrens geeignetes System anzugeben, welche auch mit den gegenwärtig zur Verfügung stehenden, für die sprachliche Kommunikation genutzten Endgeräten verwendbar sind, sofern diese zumindest über eine Verarbeitungseinheit zum Ausführen von Programmanwendungen und über eine Anschlussmöglichkeit für ein externes Mikrofon und externe Lautsprecher, beispielsweise in Form eines Headsets verfügen.

Die Aufgabe wird durch ein Verfahren mit den Merkmalen des Patentanspruchs 1 gelöst. Ein die Aufgabe lösendes und zur Durchführung des Verfahrens geeignetes System wird durch den ersten Sachanspruch charakterisiert. Vorteilhafte Ausbeziehungsweise Weiterbildungen der Erfindung sind durch die jeweiligen Unteransprüche gegeben.

Das vorgeschlagene Verfahren bezieht sich auf die Einspielung zusätzlicher akustischer Signale in eine zum Zweck der sprachlichen Kommunikation über eine Netzwerk aufgebaute Sprachverbindung. Gemäß dem Verfahren werden Mikrofonsignalen, welche über die Sprachverbindung von einem ersten Endgerät an ein zweites Endgerät übertragen werden, entsprechende zusätzliche akustische Signale auf Veranlassung eines das erste Endgerät für die Kommunikation verwendenden Teilnehmers als Zusatzsignale hinzugefügt. Bei den vorgenannten Mikrofonsignalen handelt es sich um akustische Signale, welche von mindestens einem mit dem Endgerät an einer Anschlussbuchse des Endgeräts verwendeten externen Mikrofon, vorzugsweise einem Mikrofon eines Headsets, entgegengenommen werden. Es handelt sich somit insbesondere um Sprachsignale, nämlich um akustische Signale des durch den das erste Endgerät verwendenden Teilnehmers in das externe Mikrofon Gesprochenen. Die in die Sprachverbindung einzuspielenden zusätzlichen akustischen Signale (im Weiteren vereinfachend Zusatzsignale) werden gemäß dem vorgeschlagenen Verfahren durch einen Speicher des mit einer Verarbeitungseinheit zur Ausführung von Programmanwendungen ausgestatteten ersten Endgeräts bereitgestellt. Die zusätzlichen akustischen Signale werden in die Sprachverbindung aufgrund einer entsprechenden Bedienung einer von der vorgenannten Verarbeitungseinheit des ersten Endgeräts ausgeführten Programmanwendung eingespielt.

Da es bei entsprechenden Endgeräten, wie beispielsweise Smartphones oder Tablet-PCS mit Telefonfunktion, in der Regel nicht möglich beziehungsweise nicht vorgesehen ist, entsprechende Zusatzsignale, beispielsweise im Speicher des Endgeräts gehaltene Musikdateien, unmittelbar den Mikrofonsignalen des Endgeräts hinzuzufügen, erfolgt die Einspielung der Zusatzsignale gemäß dem hiermit vorgeschlagenen Verfahren unter Verwendung eines externen Mikrofons wie folgt. Durch die, von dem das erste Endgerät verwendenden Teilnehmer bediente Programmanwendung werden die Zusatzsignale mindestens einem Kanal von über eine Anschlussbuchse des ersten Endgeräts für externe Lautsprecher beziehungsweise Kopfhörer ausgegebenen Lautsprechersignalen beigemischt. Dies ist mittels entsprechender Programmanwendungen, wie Minianwendungen beziehungsweise so genannter Apps, ohne Weiteres möglich. Insoweit sei darauf hingewiesen, dass es zum Beispiel bei Smartphones möglich ist, während eines Telefonats einen MP3-Player zu starten, so dass die den von dem anderen Gesprächsteilnehmer empfangenen akustischen Signalen (unabhängig davon, ob sie unmittelbar über den eigenen Lautsprecher des Endgeräts oder über externe Lautsprecher, wie die Kopfhörer eines Headsets ausgegeben werden) gemeinsam, das heißt zeitgleich mit den akustischen Signalen der Musik des MP3-Players ausgegeben werden. Aus dem durch die Beimischung der Zusatzsignale zu den Lautsprechersignalen entstandenen Signalgemisch werden dann die Zusatzsignale in einer zwischen dem externen Mikrofon und den Anschlussbuchsen des Endgeräts angeordneten externen Zusatzeinrichtung wieder extrahiert und den Mikrofonsignalen, also insbesondere den vom Verwender des ersten Endgeräts durch das externe Mikrofon entgegengenommenen Sprachsignalen, vor deren Aussendung an das zweite Endgerät beigemischt. Wie bereits ausgeführt und bei der Erläuterung des erfindungsgemäßen Systems nochmals angegeben, handelt es sich bei dem externen Mikrofon vorzugsweise um ein Mikrofon eines Headsets. Daher soll im Zusammenhang mit den weiteren Darstellungen zum Verfahren auch im Allgemeinen vereinfachend von einem Headset beziehungsweise dem Mikrofon eines Headsets gesprochen werden, ohne das jedoch die Erfindung hierauf beschränkt wäre. Darüber hinaus sollen von den wiederholt angesprochenen externen Lautsprechern insbesondere auch die Kopfhörer eines solchen Headsets umfasst sein.

Grundgedanke der Erfindung ist es also, die akustischen Zusatzsignale, wie beispielsweise Musik, Jingles oder Geräusche zum Ausdrücken einer Emotion, mit Hilfe einer Zusatzeinrichtung außerhalb des Endgeräts den Mikrofonsignalen hinzuzufügen, wobei die hinzuzufügenden beziehungsweise in die Sprachverbindung einzuspielenden Zusatzsignale der vorgenannten Zusatzeinrichtung durch eine auf dem Endgerät verarbeitete App an einem Lautsprecherausgang beziehungsweise einem Kopfhörerausgang (Anschlussbuchse) des Endgeräts als Bestandteil eines Signalgemisches zur Verfügung gestellt werden.

Das Verfahren ist dabei vorzugsweise so ausgebildet, dass die in der Zusatzeinrichtung wieder aus dem Signalgemisch extrahierten Zusatzsignale gemeinsam mit den vom Gesprächspartner, also dem zweiten Teilnehmer, empfangenen akustischen Signalen (insbesondere Sprachsignalen) an den Kopfhörern des an das erste Endgerät angeschlossenen Headsets (oder an externen Lautsprechern) ausgegeben werden. Hierdurch hat der das erste Endgerät (mit Headset und Zusatzeinrichtung) verwendende Teilnehmer, welcher die Beimischung der Zusatzsignale veranlasst, eine zeitsynchrone akustische Kontrolle über die seinen Sprachsignalen tatsächlich hinzugefügten Zusatzsignale.

Die bereits mehrfach angesprochene Programmanwendung beziehungsweise App wird von dem die Zusatzsignale in die Sprachverbindung einspielenden Teilnehmer beispielsweise durch Bedienung virtueller, auf dem Display des Endgeräts dargestellter Bedienelemente unmittelbar über das Endgerät bedient. Gemäß eine vorteilhaften Ausbildung des vorgeschlagenen Verfahrens kann dieses jedoch auch so ausgestattet sein, dass die App durch den Verwender des ersten Endgeräts mittels der in der Zuleitung zu dem Headset (beziehungsweise zu dem externen Mikrofon und den externen Lautsprechern) angeordneten Zusatzeinrichtung gesteuert beziehungsweise bedient wird. Diese kann hierzu beispielsweise ebenfalls über ein kleines Display verfügen und entsprechende Bedienelemente, mittels welcher der Teilnehmer die jeweils einzuspielenden Zusatzsignale aus einer ihm auf dem Display der Zusatzeinrichtung präsentierten Liste beziehungsweise einem in dem Speicher der Zusatzeinrichtung gehaltenen Katalog auswählt. Hierbei kann es sich um eine Liste der entsprechenden Musiktitel, um Angaben zu diesen Musiktiteln oder um entsprechende Metadaten handeln, wobei die Einträge in der Liste / in dem Katalog Verweise auf die im Speicher des Endgeräts gehaltenen Zusatzsignale darstellen. Selbstverständlich ist darüber hinaus eine Auslegung des Verfahrens beziehungsweise des Systems zu seiner Durchführung denkbar, bei welcher eine Bedienung der von der Verarbeitungseinheit des ersten Endgeräts erfindungsgemäß verarbeiteten Programmanwendung wahlweise am Endgerät selbst oder an der Zusatzeinrichtung ermöglicht ist.

Wie bei der grundsätzlichen Darstellung des Verfahrens ausgeführt, werden die Zusatzsignale von der durch den Verwender des ersten Endgeräts bedienten Programmanwendung mindestens einem Kanal der über die Anschlussbuchse für das Headset beziehungsweise für die externen Lautsprecher ausgegebenen Lautsprechersignale beigemischt. Die Art der Beimischung und der hierfür verwendeten Kanäle der Lautsprechersignale hängt dabei insbesondere von der Art und Beschaffenheit des jeweils bei der Durchführung des Verfahrens verwendeten ersten Endgeräts ab. Insoweit werden die Zusatzsignale gemäß einer ersten Ausgestaltung des erfindungsgemäßen Verfahrens genau einem der Stereokanäle für die Lautsprechersignale beigemischt. Bewerkstelligt wird dies - nämlich die Zumischung des Zusatzsignals zu genau einem der Kanäle - ausschließlich durch die im Rahmen des erfindungsgemäßen Verfahrens von dem Endgerät beziehungsweise von dessen Verarbeitungseinheit verarbeitete Programmanwendung, worauf an dieser Stelle ausdrücklich hingewiesen werden soll. Die Extraktion der Zusatzsignale aus dem dabei gebildeten Signalgemisch erfolgt in der Zusatzeinrichtung dadurch, dass die beiden bei ihm eingehenden Stereokanäle voneinander subtrahiert werden. Das im Ergebnis dieser Subtraktion erhaltenen Zusatzsignal wird dann einerseits den Mikrofonsignalen vom externen Mikrofon beigemischt und andererseits gemeinsam mit den Lautsprechersignalen über beide Stereokanäle an den externen Lautsprechern beziehungsweise an den Kopfhörern eines Headsets ausgegeben.

Gemäß einer weiteren vorgesehenen Ausbildungsform erfolgt die Beimischung der Zusatzsignale zu den Lautsprechersignalen im Anschluss an die Modulation eines Trägersignals mit dem Zusatzsignal. Umgekehrt wird das Zusatzsignal in der in die Verbindung mit dem Headset angeordneten Zusatzeinrichtung dadurch wiedergewonnen, dass aus dem bei der Zusatzeinrichtung eingehenden Signalgemisch zunächst der mit dem Zusatzsignal modulierte Träger abgetrennt und aus diesem durch Demodulation (reziprok zu der im Endgerät erfolgten Modulation) das dem Mikrofon beizumischende Zusatzsignal gewonnen wird. Eine solche Vorgehensweise wird für Endgeräte, wie beispielsweise Smartphones, bei denen auch die an der Anschlussbuchse die externen Lautsprecher beziehungsweise für die Kopfhörer des Headsets anstehenden Lautsprechersignale auf ein Trägersignal aufmoduliert sind, gewählt. Um die Trennung des mit dem Zusatzsignal modulierten Trägers aus dem bei dem Zusatzgerät eingehenden Signalgemisch zu ermöglichen, wird für das mit dem Zusatzsignal zu modulierende Trägersignal eine gegenüber der Frequenz des Trägersignals für die Lautsprechersignale abweichende Frequenz gewählt. Die Trennung kann dann innerhalb der Zusatzeinrichtung mit Hilfe eines entsprechenden Hoch- oder Tiefpasses erfolgen. Die Modulation der Zusatzsignale auf ein Trägersignal mit einer gegenüber dem Trägersignal für die (übrigen) Lautsprechersignale abweichenden Frequenz wird durch die gemäß dem Verfahren von dem Endgerät ausgeführte Programmanwendung (App) bewerkstelligt.

Ein die Aufgabe lösendes, zur Durchführung des Verfahrens geeignetes System ist zur Verwendung mit einem eine Verarbeitungseinheit sowie einen Speicher aufweisenden und mit einem externen Mikrofon beziehungsweise einem Headset betriebenen Endgerät, wie beispielsweise einem Smartphone, konzipiert. Das System besteht aus dem wie zuvor angegeben ausgestatteten Endgerät selbst, dem mindestens einen an einer Anschlussbuchse mit dem Endgerät betriebenen externen Mikrofon, einer von der Verarbeitungseinheit des Endgeräts ausführbaren Programmanwendung, nämlich einer App, und aus einer zwischen dem externen Mikrofon und dem Endgerät mit den Anschlussbuchsen für das mindestens eine externe Mikrofon sowie für externe Lautsprecher angeordneten, mit der vorgenannten, auf dem Endgerät ablaufenden Programmanwendung interagierenden externen Zusatzeinrichtung. Die genannte Programmanwendung ist dabei insbesondere dadurch gekennzeichnet, dass mittels ihrer, von dem das Endgerät benutzenden Teilnehmer ausgewählte Zusatzsignale mindestens einem Kanal von an der entsprechenden Anschlussbuchse für externe Lautsprecher ausgegebenen Lautsprechersignalen beigemischt werden.

Die zwischen dem Endgerät mit seinen Anschlussbuchsen (für Lautsprecher und Mikrofon) und dem externen Mikrofon eingefügte Zusatzeinrichtung umfasst zumindest eine oder mehrere Einheiten, mittels derer die den Lautsprechersignalen zugemischten Zusatzsignale aus dem dabei gebildeten Signalgemisch wieder extrahiert und den von dem externen Mikrofon entgegengenommenen Mikrofonsignalen, welche dem Endgerät zur Aussendung an mindestens einen anderen Teilnehmer zugeführt werden, beigemischt werden. Die konkrete Ausbildung der Einheit oder Einheiten zur Extraktion des Zusatzsignals aus dem der Zusatzeinrichtung über die Anschlussbuchse für das Headset zugeführten Signalgemisch ist nicht Gegenstand der Erfindung und soll daher an dieser Stelle nicht näher erläutert werden. Entsprechendes gilt für die Einheit oder Einheiten zur Beimischung der Zusatzsignale zu den Mikrofonsignalen des externen Mikrofons. Die dafür erforderlichen technischen Mittel sind dem Fachmann als solches bekannt. Die Möglichkeit des Beimischens von anderen akustischen Signalen, wie der Musik eines MP3-Players, zu den über die entsprechende Anschlussbuchse des Endgeräts auszugebenden Lautsprechersignalen und die Nutzung dieser Möglichkeit mittels dazu ausgebildeter Programmanwendungen beziehungsweise Apps wird durch eine Vielzahl auf den Markt befindlicher computerbasierter Endgeräte, wie Smartphones, Tablet-PCs und dergleichen zur Verfügung gestellt und soll ebenfalls nicht Gegenstand der Erfindung und weitergehender Erläuterungen sein. Gemäß einer bevorzugten Ausbildungsform sind das mindestens eine externe Mikrofon und die externen Lautsprecher Bestandteile eines Headsets. Insoweit soll auch bei den weiteren Darstellungen zum System vereinfachend im Allgemeinen von einem Headset gesprochen werden, ohne dass hierin eine Beschränkung gesehen werden soll. Insoweit ist es für die Erfindung beziehungsweise das dieser zugrundeliegende Prinzip nicht relevant, ob es sich bei dem, im Zusammenhang mit den weiteren Erläuterungen angesprochenen (mindestens einen) externen Mikrofon und bei den angesprochenen externen Lautsprechern jeweils um separate Einheiten oder eben um Bestandteile eines Headsets handelt.

Bezüglich der Ausbildung der Einheit oder Einheiten zur Extraktion der Zusatzsignale aus dem Signalgemisch sei lediglich angemerkt, dass diese abhängig ist vom jeweiligen Typ des mit dem erfindungsgemäßen System betriebenen Endgeräts. Sie hängt insbesondere davon ab, in welcher Form die für externe Lautsprecher auszugebenden Lautsprechersignale an der zu deren Kopplung mit dem Endgerät vorgesehenen Anschlussbuchse bereitgestellt werden. Bei einer möglichen Ausbildungsform sind die entsprechenden Einheiten derart ausgebildet, dass die Zusatzsignale mittels ihrer durch Subtraktion des linken und rechten Stereokanals des Gemisches aus Lautsprechersignalen und Zusatzsignalen extrahiert wird. Eine solche Ausbildungsform ist insbesondere für den Einsatz mit Endgeräten, welche unter dem Betriebssystem Android laufen (Android ist eine eingetragene Marke der Google Inc.), vorgesehen.

Bei einer anderen Ausbildungsform des Systems werden die Zusatzsignale gesteuert durch die als Teil des Systems ausgebildete Programmanwendung vor ihrer Beimischung zu den Lautsprechersignalen für das Headset mittels einer in dem Endgerät ausgebildeten Modulationseinrichtung auf eine Trägerfrequenz aufmoduliert. Sie werden dann dem ebenfalls auf eine Trägerfrequenz aufmodulierten Lautsprechersignalen beigemischt. Hierbei wird ein die entsprechenden Trägerfrequenzen bereitstellender Frequenzgenerator des Endgeräts durch die Programmanwendung so angesteuert, dass das zur Modulation mit den Zusatzsignalen verwendete Trägersignal eine gegenüber dem Trägersignal für die Lautsprechersignale abweichende Frequenz aufweist. Die Signaltrennung beziehungsweise die Extraktion der Zusatzsignale erfolgt dabei in der zwischen die Anschlussbuchse(n) für das Headset (das externe Mikrofon / die externen Lautsprecher) und das Headset (das externe Mikrofon) eingefügten Zusatzeinrichtung dadurch, dass das mit den Zusatzsignalen modulierte Trägersignal, je nachdem ob dessen Frequenz höher oder niedriger ist als die des Trägersignals für die Lautsprechersignale, zunächst einem Hoch- oder Tiefpass zugeführt und hierdurch von dem Trägersignal für die Lautsprechersignale getrennt sowie anschließend demoduliert wird. Die im Ergebnis der Demodulation erhaltenen Zusatzsignale werden dann entsprechend dem Grundprinzip der Erfindung den von dem externen Mikrofon entgegengenommenen Mikrofonsignalen beigemischt. Eine in der zuvor dargestellten Weise gestaltete Ausbildungsform ist insbesondere zur Verwendung mit Endgeräten der Firma Apple, insbesondere mit Smartphones vom Typ iPhone (iPhone und Apple sind eingetragene Marken der Apple Inc.), vorgesehen.

Beide zuvor erläuterten Ausbildungsformen können noch dadurch weitergebildet sein, dass in der Zusatzeinrichtung Mittel zur Dämpfung der Amplitude der aus dem Signalgemisch extrahierten und den Mikrofonsignalen beizumischenden Zusatzsignale angeordnet sind. Gegebenenfalls passieren die Zusatzsignale dabei auch einen Bandpass oder Filter, damit lediglich die relevanten Frequenzanteile den Mikrofonsignalen zugemischt und mit diesen an den anderen Teilnehmer ausgesendet werden. Die Dämpfung kann notwendig sein, um ein rückwirkungsfreies Übersteuern des Endgeräts zu verhindern und um eine Anpassung des Zusatzsignals in seiner Amplitude an die auszusendenden Mikrofonsignale beziehungsweise Sprachsignale zu ermöglichen.

Im Hinblick auf die bereits zum Verfahren angesprochene Möglichkeit einer zumindest teilweisen Bedienung der Programmanwendung zur Einspielung der Zusatzsignale in die Sprachverbindung, das heißt der die Zusatzsignale den über die Anschlussbuchse für das Headset (die externen Lautsprecher) ausgegebenen Lautsprechersignale beimischenden Programmanwendung, verfügt die Zusatzeinrichtung des vorgeschlagenen Systems entsprechend einer möglichen Ausbildungsform über entsprechende Bedienmittel. Mit Hilfe dieser Bedienmittel könnten zumindest nach dem Zufallsprinzip ausgewählte Zusatzsignale in die Sprachverbindung eingespielt werden. Um eine gezielte Auswahl bestimmter Zusatzsignale, wie beispielsweise bestimmter Musikdateien, zu ermöglichen, kann die Zusatzeinrichtung darüber hinaus mit einem Speicher und einem Display ausgestattet sein.

In den beigefügten Zeichnungen werden die beiden zuvor erläuterten grundsätzlichen Ausbildungsformen des Systems in jeweils einer schematischen Darstellung verdeutlicht. Hierbei zeigen:
- Fig. 1:: eine Ausbildungsform mit Beimischung (nicht modulierter) Zusatzsignale zu den Lautsprechersignalen für ein Headset,
- Fig. 2:: eine Ausbildungsform mit Modulation der Zusatzsignale auf ein Trägersignal und anschließender Beimischung zu den ebenfalls auf ein Trägersignal aufmodulierten Lautsprechersignalen.

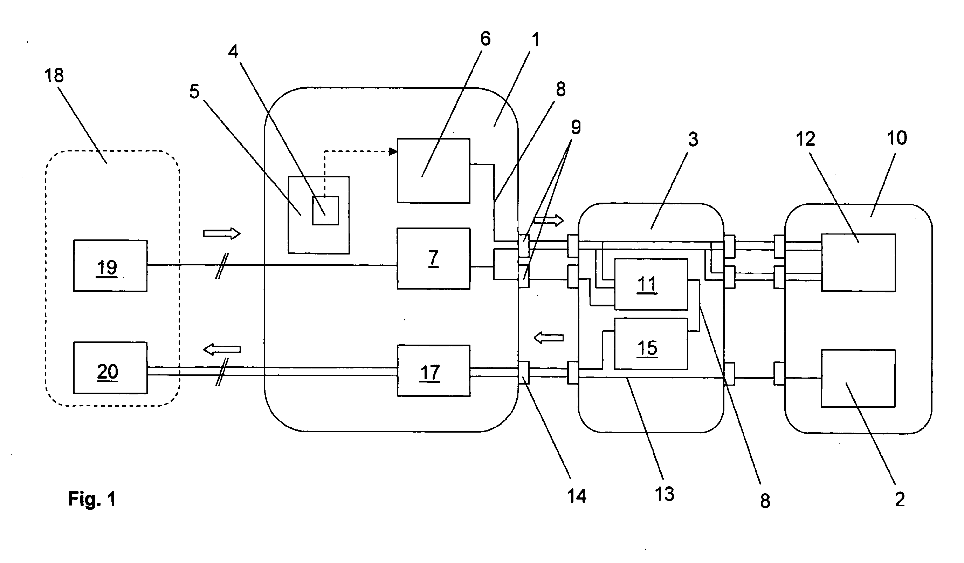

Die Fig. 1 zeigt die schematische Darstellung der bereits zuvor erläuterten ersten grundsätzlichen Ausbildungsform des erfindungsgemäßen Systems, in welcher sowohl die Teile des Systems als auch die von ihnen bereitgestellten / die ihnen zugeführten Signale durch Symbole dargestellt sind. Die Darstellung zeigt insbesondere das Endgerät 1 eines ersten, das Einspielen von Zusatzsignalen 8 in eine Sprachverbindung veranlassenden Teilnehmers, ein mit diesem Endgerät 1 betriebenes Headset 10 sowie die erfindungsgemäß vorgesehene, zwischen dem Endgerät 1 beziehungsweise einer Anschlussbuchse 9 (für Lautsprecher beziehungsweise Kopfhörer) des Endgeräts 1 und dem Headset 10 eingefügten Zusatzeinrichtung 3. In einem Speicher 6 des Endgeräts 1 werden die jeweils auf Wunsch des dieses verwendenden Teilnehmers in die Sprachverbindung einzuspielenden Zusatzsignale 8 in Form von Musikdateien gehalten. Mit dem Aufbau einer Gesprächsverbindung oder der Annahme eines Anrufs startet der das Endgerät 1 verwendende Teilnehmer die erfindungsgemäß vorgesehene, durch die Verarbeitungseinheit 5 des Endgeräts 1 ausführbare Programmanwendung 4 beziehungsweise App. Mittels eines Menüs ist es ihm möglich, eine der von dem Speicher 6 gehaltenen Musikdateien auszuwählen und diese in die aufgebaute Sprachverbindung einzuspielen. Durch die in entsprechender Weise vom Teilnehmer bediente Programmanwendung 4 beziehungsweise App werden die, die ausgewählte Musikdatei repräsentierenden Zusatzsignale 8 einem Kanal der über die Anschlussbuchse 9 auszugebenden Lautsprechersignale 7 (mit insbesondere an einem Mikrofon 19 eines von einem anderen Teilnehmer verwendeten Endgeräts 18 entgegengenommenen und an das Endgerät 1 übertragenen Sprachsignalen) beigemischt. Das hierbei entstehende Signalgemisch wird der Zusatzeinrichtung 3 zugeführt, welche zwischen der Anschlussbuchse 9 für die Lautsprecher 12 beziehungsweise Kopfhörer des Headsets 10 und dem Headset 10 angeordnet ist. Hier werden beide Kanäle des Stereosignals in einer dafür ausgebildeten Einheit 11 (Subtraktionseinheit) voneinander subtrahiert, so dass die lediglich einem Kanal der Lautsprechersignale 7 beigemischten Zusatzsignale 8 mit der entsprechenden Musik wieder aus dem Signalgemisch extrahiert werden. Diese werden dann über eine ebenfalls in der Zusatzeinrichtung 3 ausgebildete Dämpfungseinheit 15 den durch die Zusatzeinrichtung 3 von dem Mikrofon 2 entgegengenommenen Mikrofonsignalen 13 des Headsets 10 beigemischt und das Gemisch dem Endgerät 1 über die Anschlussbuchse 14 für das externe Mikrofon 2 zur Aussendung zugeleitet, in welchem das entsprechende Signalgemisch vor der Aussendung an ein anderes Endgerät 18 durch einen Mikrofonverstärker 17 aufbereitet wird. In der Praxis sind die Anschlussbuchsen 9, 14 in der Regel körperlich in einer Anschlussbuchse (jedoch mit elektrischer Trennung von Lautsprechersignalen 7 und Mikrofonsignalen 13) des Endgeräts 1 vereint.

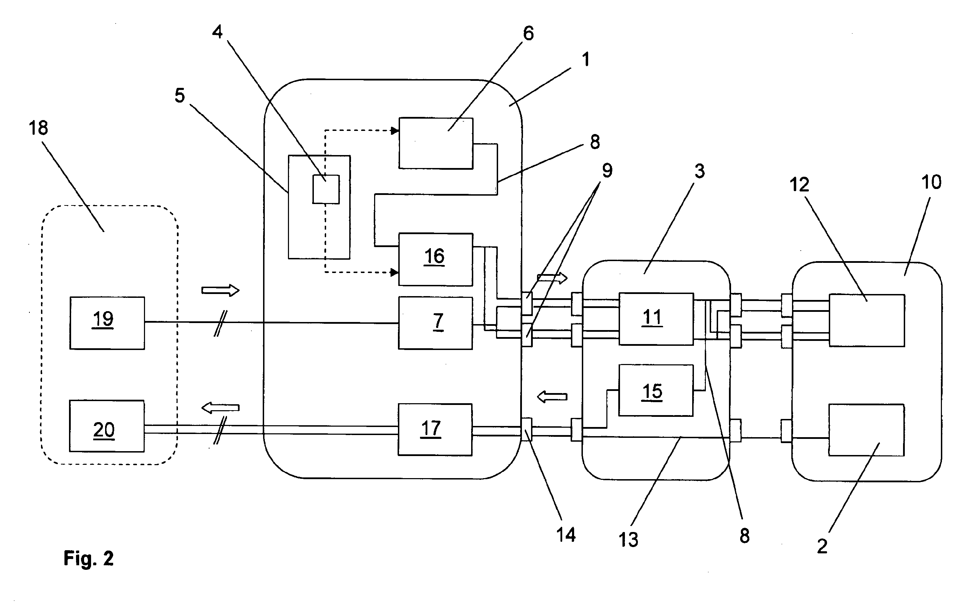

Die Fig. 2 zeigt die zweite grundsätzliche Ausbildungsform des Systems, bei welcher die in die Sprachverbindung einzuspielenden Zusatzsignale 8 vor ihrer Mischung mit den Lautsprechersignalen 7 mittels eines entsprechenden Modulators 16 (AM/FM/FSK Modulator) des Endgeräts 1 einem Trägersignal aufmoduliert werden. Entsprechendes, also die Modulation der Zusatzsignale 8 (für das Beispiel soll auch hier von einer Musikdatei ausgegangen werden) auf ein Trägersignal und die Beimischung des modulierten Trägersignals zu einem mit den am Headset 10 auszugebenden Lautsprechersignalen 7 modulierten Trägersignal, erfolgt auch hier durch Veranlassung des Nutzers beziehungsweise Teilnehmers durch die von ihm dazu gestartete und von der Verarbeitungseinheit 5 des Endgeräts 1 ausgeführte App. Bei dem gezeigten Beispiel wird das mit den Zusatzsignalen 8 modulierte Trägersignal beiden Kanälen der ebenfalls auf ein Trägersignal aufmodulierten Lautsprechersignale 7 zugeführt. In der Zusatzeinrichtung 3, welcher das auf diese Weise entstandene Signalgemisch zugeleitet wird, erfolgt wiederum die Extraktion der Zusatzsignale 8 und deren Beimischung zu den ebenfalls von der Zusatzeinrichtung 3 entgegengenommenen und dem Endgerät 1 zuzuleitenden Mikrofonsignalen 13 des Headsets 10. Dies geschieht in der Weise, dass das Signalgemisch einem Tief- oder Hochpass zugeleitet wird, in welchem das Trägersignal mit den Zusatzsignalen 8 von dem, eine andere Frequenz aufweisenden Trägersignal mit den Lautsprechersignalen 7 getrennt wird. Das solchermaßen abgetrennte, mit den Zusatzsignalen 8 modulierte Trägersignal wird dann einem Demodulator (hier Bestandteil der Einheit 11) zugeführt, mittels welchem die eigentlichen Zusatzsignale 8 durch Demodulation, nämlich Umkehrung der zuvor in dem Endgerät 1 erfolgten Modulation, gewonnen und schließlich über eine Dämpfungseinheit 15 geführt und den Mikrofonsignalen 13 beigemischt wird. Die Mikrofonsignale 13 werden gemeinsam mit den ihnen beigemischten Zusatzsignalen 8 über die Anschlussbuchse 14 dem Endgerät 1 zugeführt und von diesem, nach Aufbereitung des entsprechenden Signalgemisches in einem Mikrofonverstärker 17, an ein Endgerät 18 eines anderen Teilnehmers ausgesendet, wo sie über mindestens einen Lautsprecher 20 oder Kopfhörer ausgegeben werden.

### Liste der Bezugszeichen

- 1: (erstes) Endgerät
- 2: Mikrofon
- 3: Zusatzeinrichtung
- 4: Programmanwendung
- 5: Verarbeitungseinheit
- 6: Speicher
- 7: Lautsprechersignale
- 8: Zusatzsignale
- 9: Anschlussbuchse
- 10: Headset
- 11: Einheit
- 12: Lautsprecher / Kopfhörer
- 13: Mikrofonsignale
- 14: Anschlussbuchse
- 15: Dämpfungseinheit
- 16: Modulator
- 17: Mikrofonverstärker
- 18: (zweites) Endgerät
- 19: Mikrofon (des zweiten Endgeräts)
- 20: Lautsprecher (des zweiten Endgeräts)

## Patentansprüche

1. Verfahren zur Einspielung zusätzlicher akustischer Signale in eine über ein Netzwerk zwischen einem ersten Endgerät (1) und einem zweiten Endgerät (18) aufgebaute Sprachverbindung, nach welchem akustische Signale, die als Mikrofonsignale (13) von einem an einer Anschlussbuchse (14) mit dem ersten Endgerät (1) verwendeten externen Mikrofon (2) entgegengenommen werden, von einem Speicher (6) des mit einer Verarbeitungseinheit (5) ausgestatteten ersten Endgerätes (1) bereitgestellte Zusatzsignale (8) in Form weiterer akustischer Signale hinzugefügt und an das zweite Endgerät (18) übertragen werden, wobei die aufgrund einer entsprechenden Bedienung einer von der Verarbeitungseinheit (5) des ersten Endgeräts (1) ausgeführten Programmanwendung (4) auf Veranlassung eines das erste Endgerät (1) für die Kommunikation nutzenden Teilnehmers in die Sprachverbindung eingespielten Zusatzsignale (8) mindestens einem Kanal von an einer Anschlussbuchse (9) des ersten Endgeräts (1) ausgegebenen Lautsprechersignalen (7) unter Ausbildung eines Signalgemisches beigemischt werden, **dadurch gekennzeichnet, dass**
a.) das Signalgemisch aus den Lautsprechersignalen (7) und den ihnen beigemischten Zusatzsignalen (8) einer zwischen dem externen Mikrofon (2) und dem Endgerät (1) mit den Anschlussbuchsen (9, 14) angeordneten externen Zusatzeinrichtung (3) zugeführt wird in welcher die Zusatzsignale (8) wieder aus diesem Signalgemisch extrahiert werden,
b.) den von dem externen Mikrofon (2) entgegengenommenen Mikrofonsigna-len (13) vor ihrer Aussendung an das zweite Endgerät (18) in der externen Zusatzeinrichtung (3) die aus dem Signalgemisch mit den Lautsprechersignalen extrahierten Zusatzsignale (8) beigemischt werden,
c.) das durch die Beimischung der Zusatzsignale (8) zu den Mikrofonsignalen (13) in der externen Zusatzeinrichtung (3) entstehende Signalgemisch dem ersten Endgerät (1) über dessen Anschlussbuchse (14) zur Aussendung an das zweite Endgerät (18) zugeführt wird.

2. Verfahren nach Anspruch 1, **dadurch gekennzeichnet, dass** die in der Zusatzeirichtung (3) aus dem Signalgemisch extrahierten Zusatzsignale (8) gemeinsam mit den während des Bestehens der Sprachverbindung von dem zweiten Endgerät (18) eingehenden akustischen Signalen an über die Anschlussbuchse (9) an das Endgerät (1) angeschlossenen externen Lautsprechern (12) oder Kopfhörern eines Headsets (10) ausgegeben werden.

3. Verfahren nach Anspruch 1 oder 2, **dadurch gekennzeichnet, dass** die die Zusatzsignale (8) zu den Lautsprechersignalen (7) beimischende Programmanwendung (4) von dem das erste Endgerät (1) verwendenden Teilnehmer durch am ersten Endgerät (1) ausgeführte Bedienvorgänge gesteuert wird.

4. Verfahren nach einem der Ansprüche 1 bis 3, **dadurch gekennzeichnet, dass** die die Zusatzsignale (8) zu den Lautsprechersignalen (7) beimischende Programmanwendung (4) von dem das erste Endgerät (1) verwendenden Teilnehmer durch an der Zusatzeinrichtung (3) ausgeführte Bedienvorgänge gesteuert wird.

5. Verfahren nach Anspruch 4, **dadurch gekennzeichnet, dass** in einem Speicher der Zusatzeinrichtung (3) ein Katalog oder eine Auswahlliste mit den für die Einspielung in die Sprachverbindung zur Verfügung stehenden Zusatzsignalen (8) gehalten wird.

6. Verfahren nach einem der Ansprüche 1 bis 5, **dadurch gekennzeichnet, dass** die Zusatzsignale (8) einem Kanal von über die Anschlussbuchse (9) in Form von Stereosignalen ausgegebenen Lautsprechersignalen (7) beigemischt werden und dass das entsprechende Signalgemisch der Zusatzeinrichtung (3) zugeführt wird, in welcher zur Extraktion der Zusatzsignale (8) aus dem Signalgemisch eine Subtraktion der Stereokanäle erfolgt.

7. Verfahren nach einem der Ansprüche 1 bis 5, **dadurch gekennzeichnet, dass** die Zusatzsignale (8) vor der Beimischung zu den Lautsprechersignalen (7) auf ein Trägersignal aufmoduliert und die auf das Trägersignal aufmodulierten Zusatzsignale (8) beiden Kanälen von über die Anschlussbuchse (9) in Form von auf ein Trägersignal aufmodulierten Stereosignalen ausgegebenen Lautsprechersignalen (7) beigemischt werden und dass das entsprechende Signalgemisch der Zusatzeinrichtung (3) zugeführt wird, wobei sich das Trägersignal für die Zusatzsignale (8) einerseits und das Trägersignal für die Lautsprechersignale (7) andererseits in ihrer Trägerfrequenz voneinander unterscheiden und wobei in der Zusatzeinrichtung (3) eine Extraktion der auf das Trägersignal aufmodulierten Zusatzsignale (8) aus dem der Zusatzeinrichtung zugeführten Signalgemisch und eine Demodulation der Zusatzsignale (8) von dem für sie verwendeten Trägersignal erfolgt.

8. System zur Einspielung von Zusatzsignalen (8) in Form zusätzlicher akustischer Signale in eine zwischen Endgeräten (1, 18) für die sprachliche Kommunikation über ein Netzwerk aufgebaute Sprachverbindung, wobei das System besteht aus einem eine Verarbeitungseinheit (5) für Programmanwendungen, einen Speicher (6) sowie Anschlussbuchsen (9, 14) aufweisenden Endgerät (1), aus mindestens einem an der Anschlussbuchse (14) mit dem Endgerät (1) betriebenen externen Mikrofon (2), aus einer zwischen dem externen Mikrofon (2) und dem Endgerät (1) mit den Anschlussbuchsen (9, 14) angeordneten externen Zusatzeinrichtung (3) und aus einer von der Verarbeitungseinheit (5) des Endgeräts (1) ausführbaren Programmanwendung (4), durch welche bei ihrer Ausführung aufgrund entsprechender Bedienung durch einen das Endgerät (1) verwendenden Teilnehmer in dem Speicher (6) des Endgeräts (1) als Daten gehaltene akustische Zusatzsignale (8) mindestens einem Kanal von an der Anschlussbuchse (9) des Endgeräts (1) für externe Lautsprecher (12) ausgegebenen und der Zusatzeinrichtung (3) zugeführten Lautsprechersignalen (7) unter Ausbildung eines Signalgemisches beigemischt werden, **dadurch gekennzeichnet, dass** die Zusatzeinrichtung (3) zumindest über eine Einheit (11) verfügt, welche ausgebildet ist zur Extraktion der Zusatzsignale (8) aus dem der Zusatzeinrichtung (3) zugeführten Signalgemisch und zur Beimischung der extrahierten Zusatzsignale (8) zu von dem mindestens einen externen Mikrofon (2) entgegengenommenen, gemeinsam mit den Zusatzsignalen (8) über die Anschlussbuchse (14) an das Endgerät (1) zur Aussendung weiterzuleitenden akustischen Signalen.

9. System nach Anspruch 8, **dadurch gekennzeichnet, dass** das mindestens eine externe Mikrofon (2) und externe Lautsprecher (12) Bestandteile eines mit dem Endgerät (1) verwendeten Headsets (10) sind, wobei es sich bei den Lautsprechern (12) um die Kopfhörer des Headsets (10) handelt.

10. System nach Anspruch 9, **dadurch gekennzeichnet, dass** die Zusatzeinrichtung (3) Bestandteil des mit dem Endgerät (1) betriebenen Headsets (10) ist und in dessen mit den Anschlussbuchsen (9, 14) des Endgeräts (1) verbundenen Zuleitungen zu den Kopfhören und dem mindestens einen Mikrofon (2) angeordnet ist.

11. System nach einem der Ansprüche 8 bis 10, **dadurch gekennzeichnet, dass** die Zusatzeinrichtung (3) Mittel zur Bedienung der durch die Verarbeitungseinheit (5) des Endgeräts (1) verarbeiteten Programmanwendung (4) aufweist.

12. System nach Anspruch 11, **dadurch gekennzeichnet, dass** die Zusatzeinrichtung (3) ein Display und einen Speicher aufweist.

13. System nach einem der Ansprüche 8 bis 11, **dadurch gekennzeichnet, dass** die Zusatzeinrichtung (3) eine Dämpfungseinheit (15) zur Dämpfung der aus dem Signalgemisch extrahierten und den Mikrofonsignalen (13) beizumischenden Zusatzsignale (8) aufweist.

## Claims

1. Process for injecting additional acoustic signals into a voice connection established over a network between a first terminal (1) and a second terminal (18), by which acoustic signals, which are received as microphone signals (13) from an external microphone (2) used with the first terminal (1) at a connecting socket (14), auxiliary signals (8) in the form of further acoustic signals made available from a memory (6) of the first terminal (1) equipped with a processing unit (5) are added and are transmitted to the second terminal (18), wherein the auxiliary signals (8) injected into the voice connection by reason of an appropriate use of a program application (4) executed by the processing unit (5) of the first terminal (1) at the instigation of a user utilising the first terminal (1) for the communication are admixed to at least one channel of loudspeaker signals (7) which are output at a connecting socket (9) of the first terminal (1), forming a composite signal, **characterised in that**
a) the composite signal consisting of the loudspeaker signals (7) and the auxiliary signals (8) admixed to them is supplied to an external auxiliary device (3) arranged between the external microphone (2) and the terminal (1) with the connecting sockets (9, 14), in which the auxiliary signals (8) are extracted from this composite signal,
b) in the external auxiliary device (3) the auxiliary signals (8) extracted from the composite signal with the loudspeaker signals are admixed to the microphone signals (13) received from the external microphone (2) prior to their transmission to the second terminal (18),
c) the composite signal arising by virtue of the admixture of the auxiliary signals (8) to the microphone signals (13) in the external auxiliary device (3) is supplied to the first terminal (1) via the connecting socket (14) thereof for transmission to the second terminal (18).

2. Process according to Claim 1, **characterised in that** the auxiliary signals extracted from the composite signal in the auxiliary device (3) are output, jointly with the acoustic signal coming in from the second terminal (18) during the existence of the voice connection, to external loudspeakers (12) or headphones of a headset (10) which are connected to the terminal (1) via the connecting socket (9).

3. Process according to Claim 1 or 2, **characterised in that** the program application (4) admixing the auxiliary signals (8) to the loudspeaker signals (7) is controlled by the user using the first terminal (1) by means of operator actions executed on the first terminal (1).

4. Process according to one of Claims 1 to 3, **characterised in that** the program application (4) admixing the auxiliary signals (8) to the loudspeaker signals (7) is controlled by the user using the first terminal (1) by means of operator actions executed on the auxiliary device (3).

5. Process according to Claim 4, **characterised in that** a catalogue or a selection list comprising the auxiliary signals (8) available for injecting into the voice connection is held in a memory of the auxiliary device (3).

6. Process according to one of Claims 1 to 5, **characterised in that** the auxiliary signals (8) are admixed to a channel of loudspeaker signals (7) which are output via the connecting socket (9) in the form of stereo signals, and **in that** the corresponding composite signal is supplied to the auxiliary device (3) in which a subtraction of the stereo channels takes place for the purpose of extracting the auxiliary signals (8) from the composite signal.

7. Process according to one of Claims 1 to 5, **characterised in that** prior to the admixture to the loudspeaker signals (7) the auxiliary signals (8) are modulated upon a carrier signal, and the auxiliary signals (8) modulated upon the carrier signal are admixed to both channels of loudspeaker signals (7) which are output via the connecting socket (9) in the form of stereo signals modulated upon a carrier signal, and **in that** the corresponding composite signal is supplied to the auxiliary device (3), whereby the carrier signal for the auxiliary signals (8), on the one hand, and the carrier signal for the loudspeaker signals (7), on the other hand, differ from one another in their carrier frequency, and whereby in the auxiliary device (3) an extraction of the auxiliary signals (8) modulated upon the carrier signal from the composite signal supplied to the auxiliary device and a demodulation of the auxiliary signals (8) from the carrier signal that is used for them take place.

8. System for injecting auxiliary signals (8) in the form of additional acoustic signals into a voice connection established between terminals (1, 18) for voice communication over a network, the system consisting of a terminal (1) exhibiting a processing unit (5) for program applications, a memory (6) and also connecting sockets (9, 14), of at least one external microphone (2) operated with the terminal (1) at the connecting socket (14), of an external auxiliary device (3) arranged between the external microphone (2) and the terminal (1) with the connecting sockets (9, 14), and of a program application (4) which is capable of being executed by the processing unit (5) of the terminal (1), by which, at the time of its execution by reason of appropriate operation by a user using the terminal (1), acoustic auxiliary signals (8) held as data in the memory (6) of the terminal (1) are admixed to at least one channel of loudspeaker signals (7) which are output at the connecting socket (9) of the terminal (1) for external speakers (12) and supplied to the auxiliary device (3), forming a composite signal, **characterised in that** the auxiliary device (3) has at least one unit (11) which has been designed for extraction of the auxiliary signals (8) from the composite signal supplied to the auxiliary device (3) and for admixture of the extracted auxiliary signals (8) to acoustic signals received from the at least one external microphone (2) and to be relayed, together with the auxiliary signals (8), to the terminal (1) via the connecting socket (14) for transmission.

9. System according to Claim 8, **characterised in that** the at least one external microphone (2) and external speakers (12) are components of a headset (10) which is used with the terminal (1), the loudspeakers (12) being the headphones of the headset (10).

10. System according to Claim 9, **characterised in that** the auxiliary device (3) is a component of the headset (10) operated with the terminal (1) and has been arranged in leads of said headset, connected to the connecting sockets (9, 14) of the terminal (1), leading to the headphones and to the at least one microphone (2).

11. System according to one of Claims 8 to 10, **characterised in that** the auxiliary device (3) exhibits means for operating the program application (4) processed by the processing unit (5) of the terminal (1).

12. System according to Claim 11, **characterised in that** the auxiliary device (3) exhibits a display and a memory.

13. System according to one of Claims 8 to 11, **characterised in that** the auxiliary device (3) exhibits an attenuating unit (15) for attenuating the auxiliary signals (8) extracted from the composite signal and to be admixed to the microphone signals (13).

## Revendications

1. Procédé d'introduction de signaux acoustiques complémentaires sur une liaison vocale établie par l'intermédiaire d'un réseau entre un premier terminal (1) et un second terminal (18), conformément auquel des signaux acoustiques captés en tant que signaux de microphone (13) par un microphone externe (2) utilisé avec le premier terminal (1) sur un connecteur (14), des signaux complémentaires (8) fournis par une mémoire (6) du premier terminal (1) équipé d'une unité de traitement (5) sont délivrés sous forme de signaux acoustiques complémentaires et sont transmis au second terminal (18), dans lequel les signaux complémentaires (8) introduits du fait d'une utilisation correspondante d'une application logicielle (4) exécutée par l'unité de traitement (5) du premier terminal (1) à l'instigation d'un participant à la liaison vocale utilisant le premier terminal (1) à des fins de communication sont mélangés à au moins un canal de signaux de haut-parleurs (7) délivrés sur un connecteur (9) du premier terminal (1) en formant un mélange de signaux, **caractérisé en ce que**
a) le mélange de signaux constitué des signaux de haut-parleurs (7) et des signaux complémentaires (8) mélangés à ceux-ci sont acheminés à un dispositif complémentaire externe (3) disposé entre le microphone externe (2) et le terminal (1) au moyen des connecteurs (9, 14), dispositif complémentaire externe dans lequel les signaux complémentaires (8) sont de nouveau extraits du mélange de signaux,
b) les signaux complémentaires (8) extraits du mélange de signaux avec les signaux de haut-parleurs sont mélangés dans le dispositif complémentaire externe (3) aux signaux de microphone (13) captés par le microphone externe (2) avant qu'ils soient émis vers le second terminal (18),
c) le mélange de signaux résultant du mélange des signaux complémentaires (8) aux signaux de microphone (13) dans le dispositif complémentaire externe (3) est acheminé au premier terminal (1) par l'intermédiaire de son connecteur (14) afin qu'il soit émis vers le second terminal (18).

2. Procédé selon la revendication 1, **caractérisé en ce que** les signaux complémentaires (8) extraits du mélange de signaux dans le dispositif complémentaire (3) sont délivrés par le second terminal (18) en association avec les signaux acoustiques entrants par l'intermédiaire du connecteur (9), pendant l'existence de la liaison vocale, à des haut-parleurs externes (12) ou à des écouteurs d'un casque audio (10) connectés au terminal (1).

3. Procédé selon la revendication 1 ou 2, **caractérisé en ce que** l'application logicielle (4) mélangeant les signaux complémentaires (8) aux signaux de haut-parleurs (7) est commandée par le participant utilisant le premier terminal (1) au moyen de processus d'utilisation exécutés sur le premier terminal (1).

4. Procédé selon l'une quelconque des revendications 1 à 3, **caractérisé en ce que** l'application logicielle (4) mélangeant les signaux complémentaires (8) aux signaux de haut-parleurs (7) est commandée par le participant utilisant le premier terminal (1) au moyen de processus d'utilisation exécutés sur le dispositif complémentaire (3).

5. Procédé selon la revendication 4, **caractérisé en ce qu'**un catalogue ou une liste de sélection comportant les signaux complémentaires (8) prêts à être introduits dans la liaison vocale est conservé dans une mémoire du dispositif complémentaire (3).

6. Procédé selon l'une quelconque des revendications 1 à 5, **caractérisé en ce que** les signaux complémentaires (8) sont mélangés à un canal de signaux de haut-parleurs (7) délivrés par l'intermédiaire du connecteur (9) sous la forme de signaux stéréophoniques et **en ce que** le mélange de signaux correspondant est acheminé au dispositif complémentaire (3) dans lequel une soustraction des canaux stéréophoniques est effectuée afin d'extraire les signaux complémentaires (8) du mélange de signaux.

7. Procédé selon l'une quelconque des revendications 1 à 5, **caractérisé en ce que** les signaux complémentaires (8) sont modulés avant le mélange aux signaux de haut-parleurs (7) sur un signal porteur et **en ce que** les signaux complémentaires (8) modulés sur le signal porteur sont mélangés aux deux canaux de signaux de haut-parleurs (7) délivrés par l'intermédiaire du connecteur (9) sous la forme de signaux stéréophoniques modulés sur un signal porteur et **en ce que** le mélange de signaux correspondant est acheminé au dispositif complémentaire (3), dans lequel le signal porteur destiné aux signaux complémentaires (8) d'une part et le signal porteur destiné aux signaux de haut-parleurs (7) d'autre part diffèrent l'un de l'autre par leur fréquence porteuse et dans lequel une extraction des signaux complémentaires (8) modulés sur le signal porteur est effectuée dans le dispositif complémentaire (3) à partir du mélange de signaux acheminé au dispositif complémentaire et une démodulation des signaux complémentaires (8) est effectuée à partir du signal porteur utilisé pour ceux-ci.

8. Système d'introduction de signaux complémentaires (8) sous la forme de signaux acoustiques complémentaires dans une liaison vocale établie par l'intermédiaire d'un réseau entre des terminaux (1, 18) destinés à des fins de communication vocale, dans lequel le système est constitué d'une unité de traitement (5) à des applications logicielles, d'une mémoire (6) ainsi que d'un terminal (1) comprenant des connecteurs (9, 14), d'au moins un microphone externe (2) fonctionnant avec le terminal (1) sur le connecteur (14), d'un dispositif complémentaire externe (3) disposé entre le microphone (2) et le terminal (1) avec les connecteurs (9, 14) et d'une application logicielle (4) pouvant être exécutée par l'unité de traitement (5) du terminal (1), application logicielle au moyen de laquelle des signaux complémentaires acoustiques (8) conservés sous forme de données dans la mémoire (6) du terminal (1) sont mélangés à au moins un canal de signaux de haut-parleurs (7) délivrés au connecteur (9) du terminal (1) pour des haut-parleurs externes (12) et acheminés au dispositif complémentaire (3) lors de son exécution du fait d'une utilisation correspondante par un participant utilisant le terminal (1) en formant un mélange de signaux, **caractérisé en ce que** le dispositif complémentaire (3) possède au moins une unité (11) qui est conçue pour extraire les signaux complémentaires (8) du mélange de signaux acheminé au dispositif complémentaire (3) et pour mélanger les signaux complémentaires extraits (8) à des signaux acoustiques devant être retransmis et captés par l'au moins un microphone externe (2) en association avec les signaux complémentaires (8) par l'intermédiaire du connecteur (14) au terminal (1) en vue de leur émission.

9. Système selon la revendication 8, **caractérisé en ce qu'**au moins un microphone externe (2) et un haut-parleur externe (12) font partie d'un casque audio (10) utilisé avec le terminal (1), dans lequel les haut-parleurs (12) sont des écouteurs du casque audio (10).

10. Système selon la revendication 9, **caractérisé en ce que** le dispositif complémentaire (3) fait partie d'un casque audio (10) fonctionnant avec le terminal (1) et est disposé dans des conducteurs de celui-ci reliés aux connecteurs (9, 14) du terminal (1) et conduisant aux écouteurs et à l'au moins un microphone (2).

11. Système selon l'une quelconque des revendications 8 à 10, **caractérisé en ce que** le dispositif complémentaire (3) comprend des moyens destinés à faire fonctionner l'application logicielle (4) traitée par l'unité de traitement (5) du terminal (1).

12. Système selon la revendication 11, **caractérisé en ce que** le dispositif complémentaire (3) comprend un afficheur et une mémoire.

13. Système selon l'une quelconque des revendications 8 à 11, **caractérisé en ce que** le dispositif complémentaire (3) comprend une unité d'atténuation (15) destinée à atténuer1209 les signaux complémentaires (8) extraits du mélange de signaux et devant être mélangés aux signaux de microphone (13).
